# EUROPEAN PATENT SPECIFICATION

(11) **EP 4 483 557 B1**
(45) Date of publication and mention of the grant of the patent: **25.03.2026**
(21) Application number: 23720319.5
(22) Date of filing: 27.02.2023
(51) Int. Cl.: H04L 51/212

(54) **ELECTRONIC MESSAGING SYSTEMS**
ELEKTRONISCHE NACHRICHTENSYSTEME
SYSTÈMES DE MESSAGERIE ÉLECTRONIQUE

(30) Priority: 25.02.2022 GB 202202663
(43) Date of publication of application: 01.01.2025
(73) Proprietor: Weldsecure Limited, Guernsey GY1 1WQ (GB)
(72) Inventor: MCDOUGALL, Bruce, St. Peter Port , Guernsey GY1 1WQ (GB); CLEAL, Tony, St. Peter Port, Guernsey GY1 1WQ (GB); MARTEL, James, St. Peter Port, Guernsey GY1 1WQ (GB)
(74) Representative: Stanley, David William
(86) International application number: PCT/GB2023/050439
(87) International publication number: WO 2023/161657

(56) References cited:
- US-A1- 2018 191 754
- US-A1- 2020 311 790
- US-A1- 2021 344 710

## Description

The present invention relates to electronic messaging systems.

Electronic messaging systems are in worldwide use. For businesses, electronic messages are often sent as emails. However, there are various other formats. A major consideration for all formats of electronic messages is security. At the present time, electronic messages are continually open to compromise.

Malicious actors are conducting cyber-attacks on companies that inflect severe financial and information loss on the victim. One of the most popular attack vectors is phishing electronic messages, whereby the attacker will send an electronic message to an employee with content that is intended to trick the employee into enabling the attack.

### Example attacks are:

1. The electronic message includes a hyperlink or an attachment file that the employee clicks. The result is that malicious software (malware) is downloaded into the victim's computer and into the employer's information technology (IT) network. This then gives the attacker unauthorised access to the computer and network, to compromise the confidentiality, integrity or availability of the information in the network.
2. The electronic message appears to have been sent from a trusted source such as a client or colleague, and contains instructions for the employee to carry out an action such as to make a payment to a supplier. The employee believes the electronic message to be genuine and makes the payment using the bank details provided in the electronic message. The employee is unaware that the electronic message had been sent by a malicious actor impersonating the trusted party, and the payment is made to the attacker.

A current popular practice to reduce the risk of employees falling for phishing electronic messages is to train employees to spot phishing electronic messages, or to test the employee's ability to spot a phishing electronic message by sending them fake versions (known as a phishing simulation test). The common practice by many organisations when the employee 'fails' the phishing simulation test, is to force the employee to complete a training module that explains how to spot a phishing electronic message.

The popular practice described above has limited effect in reducing the risk of employees falling for phishing electronic messages because:
- Knowledge alone is not enough to change behaviour
- The phishing simulations are a negative experience because they punish the employee for making a wrong decision
- The employee does not benefit from making a discretionary effort to report the electronic message as suspicious and therefore there is no motivation for the employee to help the employer
- The employer does not know the thought process of the employee when they are trying to spot a phishing electronic message and therefore the employer cannot focus their training to address gaps and instead can only give generic training based on what the employer thinks.

Preferred embodiments of the present invention aim to provide electronic messaging systems that may be improved in the foregoing respects. Such embodiments employ technical means that help to engage employees in defeating cyber-attacks and help to improve upstream filtering of electronic messages. In this way, security of electronic messaging systems may be improved.

Preferred embodiments of the invention aim to identify electronic messages that may be malicious by analysing information using machine learning (ML) and/or artificial intelligence (AI) to further enable the identification of similar characteristics in other potentially malicious electronic messages. The objective of this is to achieve a technical effect of increasing cyber security through application of this analysis to inform other technical systems - for example, to prevent the delivery of potentially malicious electronic messages.

US 2018/191754 (HIGBEE AARON ET AL) relates to suspicious message processing and incident response. US 2020/311790 (KEREN YOAV) discloses a system, device, and method of protected electronic commerce and electronic financial transactions. US 2021/344710 (KRAS GREG ET AL) discloses systems and methods for automated simulated phishing campaigns using newsletters.

According to one aspect of the present invention, there is provided an electronic messaging system for enhancing cyber security, the electronic messaging system comprising a plurality of user stations and a master station with which all of the user stations communicate, wherein:
each of the user stations is arranged to:
   receive and display at the user station electronic messages containing a possible cyber-attack;
   receive an input from a user to indicate an alert relating to one of said electronic messages containing the possible cyber-attack; and
each of the user stations is further arranged to:
   display a plurality of predetermined reasons for the alert at the user's user station; and
   receive an input from the user to select at least one of said predetermined reasons: and
the master station is arranged to:
   receive the alerts from the user stations, along with respective predetermined reasons that have been selected by the users; and
   issue credits or other rewards or recognition to the users of the user stations, in response to receiving alerts and selected reasons from the users.

Preferably, the electronic messaging system further comprises a first processor that is arranged to receive data relating to the predetermined reasons received by the master station, and rank the predetermined reasons in order of use.

Preferably, each of the user stations is arranged to display the predetermined reasons in an order determined by the ranking carried out by the first processor.

Preferably, each of the user stations is arranged to receive free text input from a user to indicate a further reason for the alert, in addition to or as an alternative to said predetermined reasons, and the master station is arranged to receive said free text from the users of the user stations.

Preferably, the electronic messaging system further comprises a second processor that is arranged to receive and analyse data relating to said free text and to provide an output that may be used to inform other systems in order to improve the security of electronic messaging systems.

Preferably, the electronic messaging system further comprises a third processor that is arranged to receive data generated from other processors, including other data such as metadata, and to analyse that data using machine learning or artificial intelligence to provide an output to inform other systems in order to improve the security of electronic messaging systems.

Preferably, the outputs of the second and third processors are used to add one or more reason to the predetermined reasons that are displayed on the user stations.

Preferably, electronic messages associated with alerts received from users of the user stations are assessed at the master station and, where such an electronic message is assessed as suspicious, an additional credit or other reward or recognition is issued to the respective user.

Preferably, the electronic messaging system further comprises a plurality of master stations as aforesaid, each with its own group of user stations, and a supervisory station that is arranged to receive data from all of the master stations and process the data received from the master stations to provide an output to inform other systems in order to improve the security of electronic messaging systems.

The electronic messages may include one or more of communications such as email, instant messaging, chat or collaboration tools, communication platforms, or other similar electronic messages.

In another aspect, the invention comprises a method performed by an electronic messaging system according to any of the preceding aspects of the invention, for enhancing cyber security, including the steps of:
receiving and displaying, at each user station, electronic messages containing a possible cyber-attack;
receiving inputs from users of the user stations to indicate alerts relating to said electronic messages containing a possible cyber-attack;
displaying to the users at the user stations a plurality of predetermined reasons for the alerts;
receiving inputs from the users to select at least one of said predetermined reasons;
receiving at the master station alerts from the user stations, along with respective predetermined reasons that have been selected by the users; and
issuing credits or other rewards or recognition to the users of the user stations, in response to receiving alerts and selected reasons from the users.

Preferably, the method includes the further steps of:
receiving free text inputs at said master station from the users to indicate a further reason for the alert, in addition to or as an alternative to said predetermined reasons;
adding one or more reason to the predetermined reasons that are displayed on the user stations;
receiving and analysing data relating to said free text and providing an output that may be used to inform other systems in order to improve the security of electronic messaging systems; and
receiving data generated from other processors, including other data such as metadata, and analysing that data using machine learning or artificial intelligence to provide an output to inform other systems in order to improve the security of electronic messaging systems.

For a better understanding of the invention, and to show how embodiments of the same may be carried into effect, reference will now be made, by way of example, to the accompanying diagrammatic drawings, in which:
Figure 1 is a diagram of an electronic messaging system having a plurality of user stations and a master station;
Figure 2 is a diagram of an electronic messaging system having a plurality of master stations and a supervisory station; and
Figure 3 illustrates one example of a multiple-choice input window.

In the figures, like references denote like or corresponding parts.

It is to be understood that the various features that are described in the following and/or illustrated in the drawings are preferred but not essential. Combinations of features described and/or illustrated are not considered to be the only possible combinations. However, the invention is solely defined by the appended independent claims.

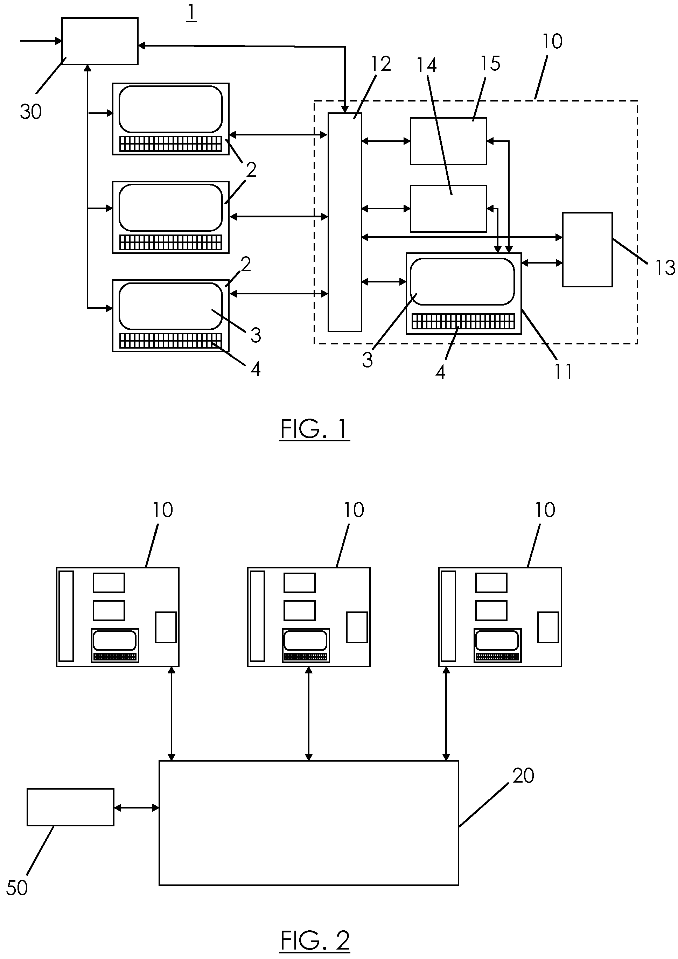

The electronic messaging system 1 shown in Figure 1 comprises a plurality of user stations 2 that communicate with a master station 10. Some or all of the user stations 2 and master station 10 may be in a common location, or they may be at locations that are remote from one another.

Each of the user stations 2 comprises one or more processor, a screen 3 and a keyboard 4 (physical or virtual). Each user station 2 is arranged to receive and send emails (and/or electronic messages in other formats). Typically, each user station 2 may comprise a PC, laptop or handheld device, such as a smartphone or tablet.

The master station 10 comprises a screen 3, keyboard 4 (physical or virtual), central processing unit 11, I/O module 12, store 13, first processor stage 14 and second processor stage 15. The first and second processor stages 14, 15 are shown separately to facilitate explanation but, in practice, may be incorporated in the central processing unit 11.

The user stations 2 may be arranged to perform various processor-based tasks. However, the focus of this embodiment of the invention is the electronic messaging system 1 of which they form part.

The electronic message system 1 comprises an upstream filter 30 that passes incoming electronic messages to the user stations 2 and is configured to delete or quarantine electronic messages that meet predetermined criteria to indicate that the electronic messages are malicious. In this example, the user stations 2 receive incoming electronic messages from a common filter 30. However, each user station 2 could alternatively have its own upstream filter 30 that is configured in a similar way to the other filters 30.

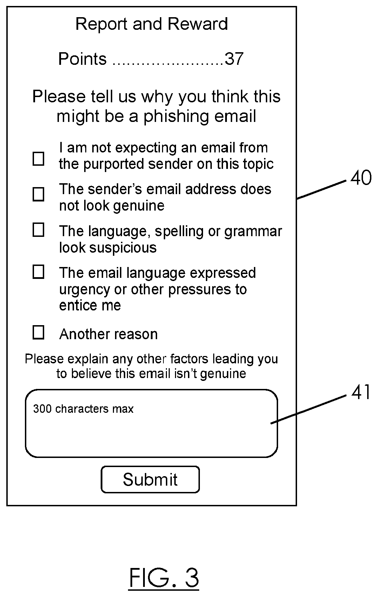

When a user identifies an incoming email communication as potentially malicious - in this example, a 'phishing' electronic message - the user activates a key to indicate an alert relating to the electronic message. Upon receiving an input generated in response to the alert, the respective user station 2 causes a multiple-choice input window, and/or a re-formatted version of the communication in order that the user can indicate the text and areas of concern, to be displayed on the screen 3. One example of such a window 40 is shown in Figure 3.

The window 40 displays a plurality of predetermined possible reasons for the alert, each with a respective check box. If the user identifies one of the predetermined reasons as the reason for the alert, the user checks the respective check box and presses the Submit button, which causes data that identifies the electronic message and the respective predetermined reason to be transmitted to the master station 10. It is possible to select more than one predetermined reason and to associate that reason with a specific text in the electronic message.

It is also possible to enter free text in a sub-window 41, to indicate a further reason for the alert, in addition to or as an alternative to the displayed predetermined reasons. Data representing such free text is then transmitted to the master station 10, along with the other relevant data.

Upon receiving alert data, along with data to indicate a valid respective reason for the alert, the master station 10 automatically increments a credit or other reward or recognition score for the respective user, which score is maintained in store 13. Data representing the updated credit score is then transmitted to the respective user station 2.

In one option, the master station 10 automatically increments a credit or other reward or recognition score for the respective user, upon receipt of an alert and a selected reason for it, irrespective of whether the selected reason is correct. In another option, the master station 10 provides automated machine review or manual review by a third party of the selected reason and associated electronic message, to ensure that there is sufficient correspondence between the selected reason and the electronic message, before incrementing the credit or other reward or recognition score.

In the example illustrated in Figure 3, the respective user has a credit or other reward or recognition score shown as 37 points. This may be redeemed by the user to receive a reward. Examples of rewards include a product from an online catalogue, additional annual leave/holiday, or a donation to a charity or corporate social responsibility (CSR) initiative, or a higher status in a league table amongst colleagues or other users.

It will be appreciated that the system, as described so far, provides an incentive for a user to report suspicious emails. Users are encouraged to report suspicious electronic messages, not only by the prospect of credits or other rewards or recognition rewards, but by ease-of-use of the system. By displaying predetermined reasons for alerts with an optional reformatted version of the electronic message, the system is at least semi-automatic. The user simply has to check a box and press the Submit button.

It is an important objective to encourage users to report suspicious electronic messages, since this provides essential data to develop and refine security measures of the electronic message system.

In this example, the first processor stage 14 of the master station 10 receives data relating to the predetermined reasons received by the master station 10 from the various user stations 2 and ranks the predetermined reasons in order of use. It will be appreciated that this is a continuous process, reflecting which types of phishing electronic messages are most active at any particular time. Security professionals will know that the types of such malicious electronic messages can vary with time.

Data from the first processor stage 14 is communicated to the user stations 2 so that, at any given time, the predetermined reasons for alerts are displayed in the window 40 in the order determined by the ranking carried out by the first processor stage 14. Thus, if at any given time there is a burst of activity with a certain type of phishing electronic message, the characterising reason for that type of electronic message is displayed first in the window 40. This helps to continuously train the users, who will repeatedly see the most usual reasons for alerts, in order of 'popularity'.

Ranking of the predetermined reasons in order of use is an optional feature. An operator might decide that the list of reasons might be static or might change based on some other criteria. Alternatively or additionally, an operator might decide to jumble up the list of reasons now and again, in order that users cannot predict the sequencing of reasons and are therefore kept on their toes.

In this example, an additional optional feature is that the second processor 15 of the master station 10 receives data relating to free text input via the sub-windows 41 and provides an output indicative of repetitive occurrences of common text in separate instances of such free text. Thus, the system is able to learn new reasons for alerts and, once a new reason has been established, the output of the second processor 15 is used to add one or more reason to the predetermined reasons that are displayed on the user stations 2. Also, data that relates to the new reasons for the alerts is fed to the upstream filter 30, to provide improved upstream filtering of electronic messages to remove or quarantine suspicious electronic messages.

Where a user at a user station 2 submits free text that is assessed at the master station 10 as indicating a suspicious electronic message, the master station 10 may optionally increment an additional credit or other reward or recognition for the user, maintained in store 13. Data representing the updated credit or other reward or recognition score is transmitted to the respective user station 2. This further encourages users to inspect electronic messages carefully and submit yet further useful data concerning suspicious electronic messages, to facilitate both machine learning in the system and manual training for users, based on data that is both up-to-date and being continually updated.

Advantageously, the master station 10 may be arranged to analyse the alerts by users of the user stations, and other data from other sources both proprietary and non-proprietary, based on modelling and algorithms to identify similar characteristics in other potentially malicious electronic messages.

In the system illustrated in Figure 2, a plurality of master stations 10 communicate with a supervisory station 20. Each master station 10 also communicates with a plurality of user stations 2, as described above, but in the interests of clarity, the user stations 2 are not reproduced in Figure 2.

The supervisory station 20 may function in a similar way to the master stations 10, although the functioning and maintenance of the user credit or other reward or recognition may be left largely to the master stations 10. Because the supervisory station 20 receives data from a plurality of master stations 10, it can process that data to provide an output representative of the ranking of alert reasons over all of the users - which may be a significantly larger number of users than in the case of a single master station 10. The user stations 2 can then be updated accordingly with predetermined alert reasons based on data that is both up-to-date and continually updated.

Likewise, data representing free text submitted by a large number of users is assessed at the supervisory station 20. Data that relates to new reasons for the alerts is then fed to upstream filters 30, to provide improved upstream filtering of electronic messages to remove or quarantine suspicious electronic messages.

The supervisory station 20 may interface with a third processor 50 that functions as a machine learning or artificial intelligence model, configured to receive and analyse data from the master stations 10 - for example, to train a machine learning model that may be used to provide predictive data to inform other systems including the upstream filter 30, in order to improve the security of electronic messaging systems.

In Figure 2, the master stations 10 may represent different departments in an organisation in which the supervisory station 20 is also located. Alternatively, the master stations 10 may represent different organisations, with the supervisory station 20 run by an independent organisation to which the different organisations subscribe to receive data from the supervisory station 20 in order to keep their security technology up-to-date and continually updated.

Although, for convenience, embodiments of the invention have been described with reference to employees and employers, it will be appreciated that electronic messaging systems in accordance with the invention may be adopted in any situation where there are a plurality of user stations, one or more master station and, optionally, a supervisory station.

Whilst embodiments of the invention as illustrated and described above are given in the context of emails, other embodiments may process electronic messages in other formats. For example, recent threat intelligence shows that cyber-attackers are focussing upon electronic messages in the Microsoft Teams (RTM) format.

It will be appreciated that, by adopting embodiments of the invention as illustrated and described above, security of electronic messaging systems may be markedly improved.

Whilst a significant advantage of such embodiments is to provide a system that operates at least semi-automatically, it will be appreciated that operators of the system can obtain and review data captured by the system in order to understand what attacks are going on, what employees understand, and how employee training may be improved. The system can adopt known technology solutions to provide machine analysis of reported electronic messages, including the user of artificial intelligence and machine learning. Such analysis can be utilised to improve automatic filtering of incoming electronic messages, as may be adopted in the upstream filters 30, for example.

In this specification, the verb "comprise" has its normal dictionary meaning, to denote non-exclusive inclusion. That is, use of the word "comprise" (or any of its derivatives) to include one feature or more, does not exclude the possibility of also including further features. The word "preferable" (or any of its derivatives) indicates one feature or more that is preferred but not essential.

The invention is not restricted to the details of the foregoing embodiment(s). In fact, the invention is solely defined by the appended independent claims.

## Claims

1. An electronic messaging system (1) for enhancing cyber security, the electronic messaging system (1) comprising a plurality of user stations (2) and a master station (10) with which all of the user stations (2) communicate, wherein:
each of the user stations (2) is arranged to:
receive and display (3) at the user station (2) electronic messages containing a possible cyber-attack; and
receive an input (4) from a user to indicate an alert relating to one of said electronic messages containing the possible cyber-attack; and
**characterised in that:**
each of the user stations (2) is arranged to:
display (40) a plurality of predetermined reasons for the alert at the user's user station; and
receive an input (4) from the user to select at least one of said predetermined reasons; and
the master station (10) is arranged to:
receive the alerts from the user stations (2), along with respective predetermined reasons that have been selected by the users; and
issue credits or other rewards or recognition to the users of the user stations (2), in response to receiving alerts and selected reasons from the users.

2. An electronic messaging system (1) according to claim 1, further comprising a first processor (14) that is arranged to receive data relating to the predetermined reasons received by the master station (10), and rank the predetermined reasons in order of use.

3. An electronic messaging system (1) according to claim 2, wherein each of the user stations (2) is arranged to display (40) the predetermined reasons in an order determined by the ranking carried out by the first processor (14).

4. An electronic messaging system (1) according to claim 1, 2 or 3, wherein each of the user stations (2) is arranged to receive free text input (4) from a user to indicate a further reason for the alert, in addition to or as an alternative to said predetermined reasons, and the master station (10) is arranged to receive said free text from the users of the user stations (2).

5. An electronic messaging system (1) according to claim 4, further comprising a second processor (15) that is arranged to receive and analyse data relating to said free text and to provide an output that may be used to inform other systems in order to improve the security of electronic messaging systems.

6. An electronic messaging system (1) according to any of the preceding claims, further comprising a third processor (50) that is arranged to receive data generated from other processors, including other data such as metadata, and to analyse that data using machine learning or artificial intelligence to provide an output to inform other systems in order to improve the security of electronic messaging systems.

7. An electronic messaging system (1) according to claims 5 and 6, wherein the outputs of the second and third processors (14, 50) are used to add one or more reason to the predetermined reasons that are displayed (40) on the user stations (2).

8. An electronic messaging system (1) according to any of the preceding claims, wherein electronic messages associated with alerts received from users of the user stations (2) are assessed at the master station (10) and, where such an electronic message is assessed as suspicious, an additional credit or other reward or recognition is issued to the respective user.

9. An electronic messaging system (1) according to any of the preceding claims, comprising a plurality of master stations (10) as aforesaid, each with its own group of user stations (2), and a supervisory station (20) that is arranged to receive data from all of the master stations(10) and process the data received from the master stations (10) to provide an output to inform other systems in order to improve the security of electronic messaging systems.

10. An electronic messaging system (1) according to any of the preceding claims, wherein the electronic messages comprise one or more of email, instant messaging, chat or collaboration tools, communication platforms.

11. A method performed by an electronic messaging system (1) comprising a plurality of user stations (2) and a master station (10) according to any of the preceding claims, for enhancing cyber security, including the steps of:
receiving and displaying (3) at the user stations (2) electronic messages containing a possible cyber-attack;
to indicate alerts relating to said electronic messages containing a possible cyber-attack; the method being **characterised by** further including the steps of:
displaying (40) to the users at the user stations (2) a plurality of predetermined reasons for the alerts;
receiving inputs (4) from the users to select at least one of said predetermined reasons;
receiving at the master station (10) alerts from the user stations (2), along with respective predetermined reasons that have been selected by the users; and
issuing credits or other rewards or recognition to the users of the user stations (2), in response to receiving alerts and selected reasons from the users.

12. A method according to claim 11, wherein the electronic messaging system (1) is in accordance with claims 4 and 6 and the method includes the further steps of:
receiving at said master station (10) free text inputs (4) from the users to indicate a further reason for the alert, in addition to or as an alternative to said predetermined reasons;
adding one or more reason to the predetermined reasons that are displayed on the user stations (2);
receiving and analysing data relating to said free text and providing an output that may be used to inform other systems in order to improve the security of electronic messaging systems; and
receiving data generated from other processors, including other data such as metadata, and analysing that data using machine learning or artificial intelligence to provide an output to inform other systems in order to improve the security of electronic messaging systems.

## Patentansprüche

1. Elektronisches Nachrichtensystem (1) zum Steigern der Cybersicherheit, wobei das elektronische Nachrichtensystem (1) eine Vielzahl von Benutzerstationen (2) und eine Masterstation (10) umfasst, mit der alle Benutzerstationen (2) kommunizieren, wobei:
jede der Benutzerstationen (2) angeordnet ist, um:
an der Benutzerstation (2) elektronische Nachrichten, die einen möglichen Cyberangriff enthalten, zu empfangen und anzuzeigen (3); und
eine Eingabe (4) von einem Benutzer zu empfangen, um eine Warnung in Bezug auf eine der elektronischen Nachrichten, die den möglichen Cyberangriff enthält, anzugeben; und
**dadurch gekennzeichnet, dass:**
jede der Benutzerstationen (2) angeordnet ist, um:
eine Vielzahl von vorbestimmten Gründen für die Warnung an der Benutzerstation des Benutzers anzuzeigen (40); und
eine Eingabe (4) von dem Benutzer zu empfangen, um mindestens einen der vorbestimmten Gründe auszuwählen; und die Masterstation (10) angeordnet ist, um:
die Warnungen von den Benutzerstationen (2) zusammen mit jeweiligen vorbestimmten Gründen, die von den Benutzern ausgewählt worden sind, zu empfangen; und
Punkte oder andere Belohnungen oder Anerkennung an die Benutzer der Benutzerstationen (2) auszustellen, als Reaktion auf das Empfangen von Warnungen und ausgewählten Gründen von den Benutzern.

2. Elektronisches Nachrichtensystem (1) nach Anspruch 1, ferner umfassend einen ersten Prozessor (14), der angeordnet ist, um Daten in Bezug auf die vorbestimmten Gründe, die von der Masterstation (10) empfangen werden, zu empfangen und die vorbestimmten Gründe in der Reihenfolge der Verwendung zu ordnen.

3. Elektronisches Nachrichtensystem (1) nach Anspruch 2, wobei jede der Benutzerstationen (2) angeordnet ist, um die vorbestimmten Gründe in einer Reihenfolge anzuzeigen (40), die durch die von dem ersten Prozessor (14) ausgeführte Rangfolge bestimmt ist.

4. Elektronisches Nachrichtensystem (1) nach Anspruch 1, 2 oder 3, wobei jede der Benutzerstationen (2) angeordnet ist, um eine Freitexteingabe (4) von einem Benutzer zu empfangen, um einen weiteren Grund für die Warnung zusätzlich zu oder als Alternative zu den vorbestimmten Gründen anzugeben, und die Masterstation (10) angeordnet ist, um den Freitext von den Benutzern der Benutzerstationen (2) zu empfangen.

5. Elektronisches Nachrichtensystem (1) nach Anspruch 4, ferner umfassend einen zweiten Prozessor (15), der angeordnet ist, um Daten in Bezug auf den Freitext zu empfangen und zu analysieren und eine Ausgabe bereitzustellen, die verwendet werden kann, um andere Systeme zu informieren, um die Sicherheit von elektronischen Nachrichtensystemen zu verbessern.

6. Elektronisches Nachrichtensystem (1) nach einem der vorhergehenden Ansprüche, ferner umfassend einen dritten Prozessor (50), der angeordnet ist, um Daten, die von anderen Prozessoren generiert werden, einschließlich anderer Daten, wie etwa Metadaten, zu empfangen und diese Daten unter Verwendung von maschinellem Lernen oder künstlicher Intelligenz zu analysieren, um eine Ausgabe bereitzustellen, um andere Systeme zu informieren, um die Sicherheit von elektronischen Nachrichtensystemen zu verbessern.

7. Elektronisches Nachrichtensystem (1) nach Anspruch 5 und 6, wobei die Ausgaben des zweiten und dritten Prozessors (14, 50) verwendet werden, um einen oder mehrere Gründe zu den vorbestimmten Gründen, die an den Benutzerstationen (2) angezeigt werden (40), hinzuzufügen.

8. Elektronisches Nachrichtensystem (1) nach einem der vorhergehenden Ansprüche, wobei elektronische Nachrichten, die Warnungen zugeordnet sind, die von Benutzern der Benutzerstationen (2) empfangen werden, an der Masterstation (10) beurteilt werden und, dort, wo eine solche elektronische Nachricht als verdächtig beurteilt wird, ein zusätzlicher Punkt oder eine andere Belohnung oder Anerkennung an den jeweiligen Benutzer ausgestellt wird.

9. Elektronisches Nachrichtensystem (1) nach einem der vorhergehenden Ansprüche, umfassend eine Vielzahl von Masterstationen (10) wie vorstehend, jeweils mit ihrer eigenen Gruppe von Benutzerstationen (2), und eine Aufsichtsstation (20), die angeordnet ist, um Daten von allen Masterstationen (10) zu empfangen und die Daten, die von den Masterstationen (10) empfangen werden, zu verarbeiten, um eine Ausgabe bereitzustellen, um andere Systeme zu informieren, um die Sicherheit von elektronischen Nachrichtensystemen zu verbessern.

10. Elektronisches Nachrichtensystem (1) nach einem der vorhergehenden Ansprüche, wobei die elektronischen Nachrichten eines oder mehrere von E-Mail, Instant Messaging, Chat- oder Kollaborationswerkzeugen, Kommunikationsplattformen umfassen.

11. Verfahren, das von einem elektronischen Nachrichtensystem (1) durchgeführt wird, das eine Vielzahl von Benutzerstationen (2) und eine Masterstation (10) nach einem der vorhergehenden Ansprüche umfasst, zum Steigern der Cybersicherheit, beinhaltend folgende Schritte:
Empfangen und Anzeigen (3), an den Benutzerstationen (2), von elektronische Nachrichten, die einen möglichen Cyberangriff enthalten;
Empfangen von Eingaben (4) von Benutzern der Benutzerstationen (2), um Warnungen in Bezug auf die elektronischen Nachrichten anzuzeigen, die einen möglichen Cyberangriff enthalten; wobei das Verfahren **dadurch gekennzeichnet ist, dass** es ferner die folgenden Schritte beinhaltet:
Anzeigen (40), für die Benutzer an den Benutzerstationen (2), einer Vielzahl von vorbestimmten Gründen für die Warnungen;
Empfangen von Eingaben (4) von den Benutzern, um mindestens einen der vorbestimmten Gründe auszuwählen;
Empfangen, an der Masterstation (10), von Warnungen von den Benutzerstationen (2) zusammen mit jeweiligen vorbestimmten Gründen, die von den Benutzern ausgewählt worden sind; und
Ausstellen von Punkten oder andere Belohnungen oder Anerkennung an die Benutzer der Benutzerstationen (2), als Reaktion auf das Empfangen von Warnungen und ausgewählten Gründen von den Benutzern.

12. Verfahren nach Anspruch 11, wobei das elektronische Nachrichtensystem (1) gemäß den Ansprüchen 4 und 6 ist und das Verfahren die folgenden weiteren Schritte beinhaltet:
Empfangen, an der Masterstation (10), von Freitexteingaben (4) von den Benutzern, um einen weiteren Grund für die Warnung zusätzlich zu oder als Alternative zu den vorbestimmten Gründen anzugeben;
Hinzufügen eines oder mehrerer Gründe zu den vorbestimmten Gründen, die an den Benutzerstationen (2) angezeigt werden;
Empfangen und Analysieren von Daten in Bezug auf den Freitext und Bereitstellen einer Ausgabe, die verwendet werden kann, um andere Systeme zu informieren, um die Sicherheit von elektronischen Nachrichtensystemen zu verbessern; und
Empfangen von Daten, die von anderen Prozessoren generiert werden, einschließlich anderer Daten, wie etwa Metadaten, und Analysieren dieser Daten unter Verwendung von maschinellem Lernen oder künstlicher Intelligenz, um eine Ausgabe bereitzustellen, um andere Systeme zu informieren, um die Sicherheit von elektronischen Nachrichtensystemen zu verbessern.

## Revendications

1. Système de messagerie électronique (1) destiné à améliorer la cybersécurité, le système de messagerie électronique (1) comprenant une pluralité de postes utilisateurs (2) et une station maître (10) avec lequel tous les postes utilisateurs (2) communiquent, dans lequel :
chacun des postes utilisateurs (2) est agencé pour :
recevoir et afficher (3), au niveau du poste utilisateur (2), des messages électroniques contenant une éventuelle cyber-attaque ; et
recevoir une saisie (4) de la part d'un utilisateur pour indiquer une alerte concernant l'un desdits messages électroniques contenant l'éventuelle cyber-attaque ; et
**caractérisé en ce que :**
chacun des postes utilisateurs (2) est agencé pour :
afficher (40) une pluralité de raisons prédéterminées pour l'alerte au niveau du poste d'utilisateur de l'utilisateur ; et
recevoir une saisie (4) de la part de l'utilisateur pour sélectionner au moins l'une desdites raisons prédéterminées ; et
la station maître (10) est agencée pour :
recevoir les alertes de la part des postes utilisateurs (2), ainsi que des raisons prédéterminées respectives qui ont été sélectionnées par les utilisateurs ; et
émettre des crédits ou d'autres récompenses ou reconnaissances aux utilisateurs des postes utilisateurs (2), en réponse à la réception d'alertes et de raisons sélectionnées de la part des utilisateurs.

2. Système de messagerie électronique (1) selon la revendication 1, comprenant en outre un premier processeur (14) qui est agencé pour recevoir des données concernant les raisons prédéterminées reçues par la station maître (10), et classer les raisons prédéterminées dans l'ordre d'utilisation.

3. Système de messagerie électronique (1) selon la revendication 2, dans lequel chacun des postes utilisateurs (2) est agencé pour afficher (40) les raisons prédéterminées dans un ordre déterminé par le classement effectué par le premier processeur (14).

4. Système de messagerie électronique (1) selon la revendication 1, 2 ou 3, dans lequel chacun des postes utilisateurs (2) est agencé pour recevoir une saisie de texte libre (4) de la part d'un utilisateur pour indiquer une raison supplémentaire pour l'alerte, en supplément ou en tant qu'alternative auxdites raisons prédéterminées, et la station maître (10) est agencé pour recevoir ledit texte libre de la part des utilisateurs des postes utilisateurs (2).

5. Système de messagerie électronique (1) selon la revendication 4, comprenant en outre un deuxième processeur (15) qui est agencé pour recevoir et analyser des données concernant ledit texte libre et pour fournir une sortie qui peut être utilisée pour informer d'autres systèmes afin d'améliorer la sécurité de systèmes de messagerie électronique.

6. Système de messagerie électronique (1) selon l'une quelconque des revendications précédentes, comprenant en outre un troisième processeur (50) qui est agencé pour recevoir des données générées de la part d'autres processeurs, y compris d'autres données telles que des métadonnées, et pour analyser ces données en utilisant l'apprentissage automatique ou l'intelligence artificielle pour fournir une sortie pour informer d'autres systèmes afin d'améliorer la sécurité de systèmes de messagerie électronique.

7. Système de messagerie électronique (1) selon les revendications 5 et 6, dans lequel les sorties des deuxième et troisième processeurs (14, 50) sont utilisées pour ajouter une ou plusieurs raisons aux raisons prédéterminées qui sont affichées (40) sur les postes utilisateurs (2).

8. Système de messagerie électronique (1) selon l'une quelconque des revendications précédentes, dans lequel des messages électroniques associés aux alertes reçues de la part des utilisateurs des postes utilisateurs (2) sont évalués au niveau de la station maître (10) et, lorsqu'un tel message électronique est évalué comme suspect, un crédit supplémentaire ou une autre récompense ou reconnaissance est délivré à l'utilisateur respectif.

9. Système de messagerie électronique (1) selon l'une quelconque des revendications précédentes, comprenant une pluralité de stations maîtres (10) telles que susmentionnées, chacune avec son propre groupe de postes d'utilisateurs (2), et une station de supervision (20) qui est agencée pour recevoir des données de la part de toutes les stations maîtres (10) et traiter les données reçues de la part des stations maîtres (10) pour fournir une sortie pour informer d'autres systèmes afin d'améliorer la sécurité de systèmes de messagerie électronique.

10. Système de messagerie électronique (1) selon l'une quelconque des revendications précédentes, dans lequel les messages électroniques comprennent un ou plusieurs éléments parmi du courrier électronique, de la messagerie instantanée, des outils de chat ou de collaboration, ou des plates-formes de communication.

11. Procédé réalisé par un système de messagerie électronique (1) comprenant une pluralité de postes utilisateurs (2) et une station maître (10) selon l'une quelconque des revendications précédentes, destiné à améliorer la cybersécurité, comprenant les étapes de :
réception et affichage (3), au niveau des postes utilisateurs (2), de messages électroniques contenant une éventuelle cyber-attaque ;
réception de saisies (4) de la part des utilisateurs des postes utilisateurs (2) pour indiquer des alertes concernant lesdits messages électroniques contenant une éventuelle cyber-attaque ; le procédé étant **caractérisé en ce qu'**il comprend en outre les étapes de :
affichage (40), aux utilisateurs au niveau des postes d'utilisateurs (2), d'une pluralité de raisons prédéterminées pour les alertes ;
réception de saisies (4) de la part des utilisateurs pour sélectionner au moins l'une desdites raisons prédéterminées ;
réception, au niveau de la station maître (10), d'alertes de la part des postes utilisateurs (2), ainsi que de raisons prédéterminées respectives qui ont été sélectionnées par les utilisateurs ; et
émission de crédits ou d'autres récompenses ou reconnaissances aux utilisateurs des postes utilisateurs (2), en réponse à la réception d'alertes et de raisons sélectionnées de la part des utilisateurs.

12. Procédé selon la revendication 11, dans lequel le système de messagerie électronique (1) est conforme aux revendications 4 et 6 et le procédé comprend en outre les étapes de :
réception, au niveau de ladite station maître (10), des saisies de texte libre (4) de la part des utilisateurs pour indiquer une raison supplémentaire de l'alerte, en supplément ou en tant qu'alternative auxdites raisons prédéterminées ;
ajout d'une ou de plusieurs raisons aux raisons prédéterminées qui sont affichées sur les postes utilisateurs (2) ;
réception et analyse de données concernant ledit texte libre et fourniture d'une sortie qui peut être utilisée pour informer d'autres systèmes afin d'améliorer la sécurité de systèmes de messagerie électronique ; et
réception de données générées de la part d'autres processeurs, y compris d'autres données telles que des métadonnées, et analyse de ces données en utilisant l'apprentissage automatique ou l'intelligence artificielle pour fournir une sortie pour informer d'autres systèmes afin d'améliorer la sécurité de systèmes de messagerie électronique.
